# EUROPEAN PATENT APPLICATION

(11) **EP 0 545 051 A1**
(43) Date of publication of application: **09.06.1993**
(21) Application number: 92117917.2
(22) Date of filing: 20.10.1992
(51) Int. Cl.: B29C 33/50, A23G 1/22, A23G 3/02

(54) **Elastic molding die**

(30) Priority: 25.10.1991 JP 305701/91
(71) Applicant: OKAMOTO INDUSTRIES, INC., Bunkyo-ku Tokyo 113 (JP); ASAHI DENKA KOGYO KABUSHIKI KAISHA, Arakawa-ku Tokyo 116 (JP)
(72) Inventor: Watanabe, Akinori, Shibuya-ku, Tokyo (JP); Horiguchi, Itaru, Ryugasaki-shi, Ibaraki-ken (JP); Ando, Tsugyo, Kasukabe-shi, Saitama-ken (JP); Sato, Atsushi, Ryugasaka-shi, Ibaraki-ken (JP); Hayashi, Toshihiro, c/o Asahi, Arakawa-ku, Tokyo (JP); Hamada, Satoshi, c/o Asahi, Arakawa-ku, Tokyo (JP); Kohno, Hiroshige, c/o Asahi, Arakawa-ku, Tokyo (JP); Kato, Masaaki, c/o Asahi, Arakawa-ku, Tokyo (JP)
(74) Representative: Kraus, Walter, Dr.

(57) **Abstract**

In an elastic molding die made of an elastic film including a forming portion having an opening and a supporting portion conically extending outward continuing from the opening, diameter Y of the opening, diameter X of the cone bottom of the supporting portion, and length Z of the horizontal longest part of the forming portion have relations of X > Y, X > Z, and Z ≦ 3Y (the diameter X of the cone bottom of the supporting portion, the diameter Y of the opening, and the length Z of the horizontal longest part of the forming portion being on the same vertical plane), angle ϑ of the supporting portion to the opening is 0^{o} < ϑ ≦ 75^{o}, a connection between the opening and the supporting portion is arc-formed convex to the inside, and the supporting portion is the same or greater in film thickness than the forming portion. The elastic molding die provides smooth releasing and taking out of the molding.

## Description

### Technical Field

This invention relates to an elastic molding die for use in the production of moldings of such materials as foodstuffs such as chocolate, jelly, boiled fish paste, cheese and the like, and cosmetics such as lipsticks, soap and the like.

### Background technology

There has heretofore been known a method of molding chocolate, jelly or the like into shapes of dolls, animals, and the like using an elastic molding die. The elastic molding die used for this purpose comprises a forming portion made of an elastic film and formed in a desired shape such as a doll or an animal, and a supporting portion made of an elastic film which is provided on an opening of the forming portion for supporting the forming portion. When molding using the elastic molding die, an end of the supporting portion is held, for example, with an annular frame to hand down the forming portion along with the supporting portion, a fluidized molding material is poured through the opening of the forming portion to fill the forming portion with the molding material, and cooled or heated to solidify the molding material, followed by releasing the solidified molding from the forming portion. The solidified molding is taken out through the opening by swelling the forming portion using an air pressure difference. Specifically, for example, the entire elastic molding die is covered with a cup having an air vent, and air in the cup is evacuated through the air vent to expand the forming portion of the elastic molding die, or the supporting portion side of the elastic molding die is covered with a cup having an air vent, and air is pressed from the air vent into the cup to pressurize inside the cup, swelling the forming portion of the elastic molding die, or both methods are used in combination to expand the forming portion of the elastic molding die, peeling the molding from the forming portion and discharging it from the expanded opening.

The supporting portion made of the elastic film normally extends horizontally in the lateral direction from the opening of the forming portion. However, in order to facilitate supporting the forming portion or discharging the molding, there has been known an alternative method in which the supporting portion conically extends outward from the opening (Japanese Patent Publication Laid-open 3-142204). This elastic molding die facilitates supporting of the forming portion, however, discharging of the molding, that is, the female mold, is not always satisfactory.

With a view to eliminate the above prior art defects of elastic molding dies, it is a primary object of the present invention to provide an elastic molding die, which is made of an elastic film and comprises a forming portion having an opening and a supporting portion extending outward conically continuing from the opening, the elastic molding die being shaped for easy discharging of the molding, that is, smooth manipulation of a female mold.

### Disclosure of the Invention

The inventors have conducted intensive studies on the condition of a female mold of an elastic molding die made of an elastic film and comprising a forming portion having an opening and a supporting portion extending outward conically continuing from the opening, when after molding the forming portion is expanded by pressing or sucking air, or in combination of both, to release the molding. As a result, it has been found that a desirable releasing condition is that the forming portion is easily expanded and the molding can be easily taken out, and an undesirable releasing condition is that merely the conical portion of the supporting portion expands but the forming portion does not, the opening of the forming portion is insufficient in elongation, and the like. The inventors have accomplished the present invention on the basis of the consideration that the shape of the elastic molding die large affects releasing of the molding.

In accordance with the present invention, there is provided an elastic molding die made of an elastic film comprising a forming portion having an opening and a supporting portion conically extending outward continuing from the opening, characterized in that a diameter Y of the opening, a diameter X of a cone bottom of the supporting portion, and a length Z of a horizontal longest part of the forming portion have relations of X > Y, X > Z, and Z ≦ 3Y (the diameter X of the cone bottom of the supporting portion, the diameter Y of the opening, and the length Z of the horizontal longest part of the forming portion being on a same vertical plane), an angle ϑ of the supporting portion to the opening is 0^{o} < ϑ ≦ 75^{o}, a connection between the opening and the supporting portion is arc-formed convex to the inside, and the supporting portion is the same or greater in film thickness than the forming portion.

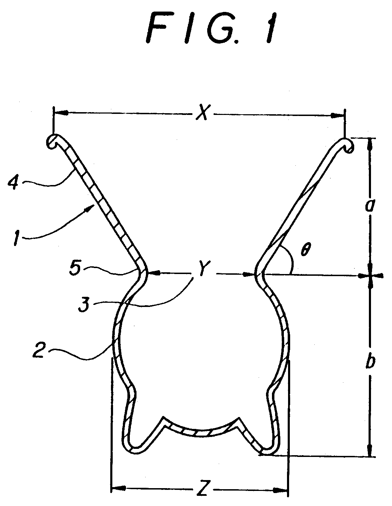

The present invention will now be described in detail. Fig.1 is a schematic vertical sectional view of the elastic molding die according to the present invention. In Fig.1, numeral 1 indicates an elastic molding die. Numeral 2 denotes a forming portion made of an elastic film, which is hollow and formed in a desired shape such as a doll, an animal, a plant or the like. Numeral 3 denotes an opening or the forming portion 2 and is circular. Numeral 4 denotes a film-formed supporting portion for supporting the forming portion, which conically extends outward from the opening 3 and is also made of an elastic film. Its film thickness is the same or greater than the thickness of the forming portion. Numeral 5 denotes a connection between the forming portion and the supporting portion, forming an arc convex to the inside. A diameter Y of the opening, a diameter X of the supporting portion which is on the same vertical plane as the diameter Y, a length Z of a horizontal longest part of the forming portion which is on the same vertical plane as the diameter Y, a height a of the supporting portion, a length b of a vertical longest part of the forming portion, and an angle ϑ of the supporting portion relative to the opening are individually as shown in Fig.1.

Fig.1 shows a circular opening 3 of the forming portion. However, the opening may be of any of shape such as elliptical, square or the like. Similarly, in addition to the circular bottom shape of the supporting portion, it may alternatively be of any shape such as elliptical, square or the like. Therefore, in addition to the circular conical form extending outward from the opening of the forming portion, the supporting portion may be of any shape such as an elliptical cone, a pyramidal form or the like.

The elastic molding die according to the present invention comprises a forming portion having an opening and a supporting portion extending outward conically continuing from the opening, wherein the relationship between the diameter Y and the diameter X of the cone bottom of the supporting portion is X > Y. This means that, in the present invention, the supporting portion is extending outward from the opening. Such a configuration facilitates supporting of the forming portion and the taking out work of the resulting molding.

Furthermore, in the elastic molding die according to the present invention, the relationship between the length Z of the horizontal longest part of the forming portion and the diameter X of the cone bottom of the supporting portion is X > Z, and the relationship between the diameter Y of the opening and the length Z of the horizontal longest part of the forming portion is Z ≦ 3Y. The angle ϑ of the cone relative to the opening, that is, the angle at which the supporting portion supports the forming portion is 0^{o} < ϑ ≦ 75^{o}. Maintaining X, Y, Z, and ϑ in the above relationship provides smooth releasing work.

Furthermore, in the present invention, it is preferable, in addition to the above factors, to set the relation between the diameter Y of the opening and the diameter X of the cone bottom of the supporting portion to (X/3) ≦ Y < X, the relation between the diameter Y of the opening and the length b of the vertical longest part of the forming portion to 3Y ≧ b, and the relation between the height a of the supporting portion and the length b of the vertical longest part of the forming portion to (b/2) ≦ a ≦ 2b. Such a configuration provides even smoother releasing work.

The elastic molding die that satisfies the above conditions provides very smooth releasing due to its configuration. However, when the elastic molding die is formed according to these conditions, a connection 5 connecting the opening and the supporting portion tends to be angular-formed. When the elastic molding die itself is molded, the elastic raw material, for example, rubber latex tends to collect in such an angular part, resulting in a thick film. As a result, this part, that is, the opening of the forming portion is less expandable at releasing than other parts of the forming portion, resulting in a difficulty in releasing. To solve this problem, in the present invention, the part connecting the opening and the supporting portion is not angular but formed into an arc to eliminate collection of the elastic raw material, thereby obtaining the same film thickness of the part as the film thickness of the forming portion.

Furthermore, in the present invention, when the film thickness of the supporting portion is smaller than that of the forming portion, merely the supporting portion is easy to expand but the forming portion is less expandable at releasing, and releasing may become difficult. Also, for example, when the entire elastic molding die is covered with a cup and the cup is evacuated for releasing, the supporting portion tends to largely expand, and the forming portion is pushed up to the cup ceiling to be inclined, resulting in a difficulty in taking out the molding. To prevent this, in the present invention, the film thickness of the supporting portion is greater than that of the forming portion. A supporting portion film thickness greater than a forming portion film thickness can be easily achieved, when the elastic molding die is formed, by adhering a greater amount of the elastic raw material to only the supporting portion than to the forming portion.

### Brief Description of the Drawing

Fig. 1 is a schematic sectional view of the elastic molding die according to the present invention.

In the Figure, numeral 1 denotes an elastic molding die, numeral 2 denotes a forming portion, numeral 3 denotes an opening, numeral 4 denotes a supporting portion, and numeral 5 denotes a connection.

### Best Mode for Practicing the Invention

An elastic molding die was produced using natural rubber latex. The molding die had a forming portion film thickness of 0.5 mm and a supporting portion film thickness of 0.7 mm. A connection between the forming portion and the supporting portion was formed into a circular arc concave to the inside, and its film thickness was 0.5 mm. The shape and dimensions of the molding die were X = 60 mm, Y = 20 mm, Z = 45 mm, a = 40 mm, b = 20 mm, and ϑ = 60^{o}.

The fringe of the supporting portion of the elastic molding die was held by a supporting frame to hang down the elastic molding die, and the forming portion was filled with raw chocolate (Meisho Milk Choco MT27), which was solidified. Then, the entire die was covered with a cup and the cup was evacuated. Even with a low degree of vacuum, the forming portion was smoothly expanded and the opening was smoothly extended, the molding could be easily released and taken out. Therefore, the service life of the molding die could be remarkably increased.

In the present invention, since the elastic molding die is made of an elastic film and comprises the forming portion having the opening and the supporting portion extending outward conically continuing from the opening, in which the diameter Y of the opening, the diameter X of the cone bottom of the supporting portion on the same vertical plane, and the length Z of the horizontal longest part of the forming portion are maintained in a specific relation, the angle ϑ of the supporting portion relative to the opening is set to a specific angle, the connection between the opening and the supporting portion is formed into a circular are convex to the inside, and the supporting portion film thickness is greater than the forming protion film thickness, the resulting molding can be easily released from the molding die.

## Claims

1. An elastic molding die made of an elastic film comprising a forming portion having an opening and a supporting portion extending outward conically continuing from said opening, characterized in that a diameter Y of said opening, a diameter X of a cone bottom of said supporting portion, and a length Z of a horizontal longest part of said forming portion have relations of X > Y, X, > Z, and Z ≦ 3Y (the diameter X of the cone bottom of the said supporting portion, the diameter Y of said opening, and the length Z of the horizontal longest part of said forming portion being on a same vertical plane), an angle ϑ of said supporting portion relative to said opening is 0^{o} < ϑ ≦ 75^{o}, a connection between said opening and said supporting portion is arc-formed convex to the inside, and said supporting portion is the same or greater in film thickness than said forming portion.

2. The elastic molding die of Claim 1 wherein the diameter Y of said opening and the length b of a vertical longest part of said forming portion have a relation of 3Y ≧ b.

3. The elastic molding die of Claim 1 or Claim 2 wherein the diameter Y of said opening and the diameter of the cone bottom of said supporting portion have a relation of (X/3) ≦ Y < X.

4. The elastic molding die of Claim 1 or Claim 2 or Claim 3 wherein a height a of said supporting portion and a length b of the vertical longest part of said forming portion have a relation of (b/2) ≦ a ≦ 2b.
